# EUROPEAN PATENT APPLICATION

(11) **EP 1 193 903 A1**
(43) Date of publication of application: **03.04.2002**
(21) Application number: 00927820.1
(22) Date of filing: 22.05.2000
(51) Int. Cl.: H04L 1/16, H04L 29/08

(54) **DATA TRANSMISSION SYSTEM**

(71) Applicant: MITSUBISHI DENKI KABUSHIKI KAISHA, Tokyo 100-8310 (JP)
(72) Inventor: FUKUI, Noriyuki, Mitsubishi Denki Kabushiki Kaisha, Tokyo 100-8310 (JP); SHIBUYA, Akihiro, Mitsubishi Denki K.K., Tokyo 100-8310 (JP)
(74) Representative: Pfenning, Meinig & Partner
(86) International application number: JP0003239
(87) International publication number: WO0191357

(57) **Abstract**

A data transmission system having a first station and a second station, the first station acting to divide data into a plurality of sections and thereafter add sequential transmission number thereto to create a frame or frames to transmit the same, and the second station acting to receive the frame or frames. Also, in the case where the second station cannot receive several frames normally, the number of frames, on which an error is caused, being consecutive is compared with a threshold. In the case where the number is equal to or more than the threshold, the second station demands from the first station re-transmission in the GBN mode, in which all data numbered subsequent to a specified transmission number are transmitted, and in the case where the number is less than the threshold, the second station demands from the first station re-transmission in the SR mode, in which only a specified transmission number is transmitted. In addition, the threshold is set to be optimum taking account of a resource and performances in accordance with a status of data transmission.

## Description

### TECHNICAL FIELD

The invention relates to a data transmission system having a control mode, in which data involving errors are re-transmitted when errors are generated, and more particularly, to a data transmission system for performing an optimum data transmission by choosing re-transmission processing in a SR mode and re-transmission processing in a GBN mode.

### BACKGROUND OF THE INVENTION

In the case where two stations performing communication are present, and when one of the stations (transmission station) divides data into several frames to transmit the same to the other of the stations (receiving station), an error generates in a transmission line and so the receiving station cannot receive part of frames normally, there is a technique for performing re-transmission of the same frame or frames, such technique being called ARQ (Automatic Repeat Request).

Such ARQ mode is roughly classified into two kinds, that is, a SR (Selective Repeat) mode, by which only a frame or frames involving an error are re-transmitted, and a GBN (GO BACK N) mode, by which a frame or frames involving an error and a frame or frames subsequent to the above-mentioned a frame or frames are re-transmitted.

The SR mode is superior to the GBN mode in throughput characteristics but needs to store and keep a frame or frames including and succeeding a (m + 1)-th frame having been received normally until a m-th frame involving an error is received normally by re-transmission, so that there is a need of an exceedingly large buffer depending upon a manner, in which an error or errors generate. Meanwhile, the GBN mode does not need a buffer for storing and keeping a frame or frames including and succeeding a (m + 1)-th frame in order to perform re-transmission of all frames including and succeeding a m-th frame involving an error but is inferior to the SR mode in throughput characteristics because a frame or frames including and succeeding a (m + 1)-th frame having been received normally are re-transmitted.

Thus the SR mode and the GBN mode, respectively, involve disadvantages, and it has been proposed to composite the two modes, as a method for compensating for such disadvantages.

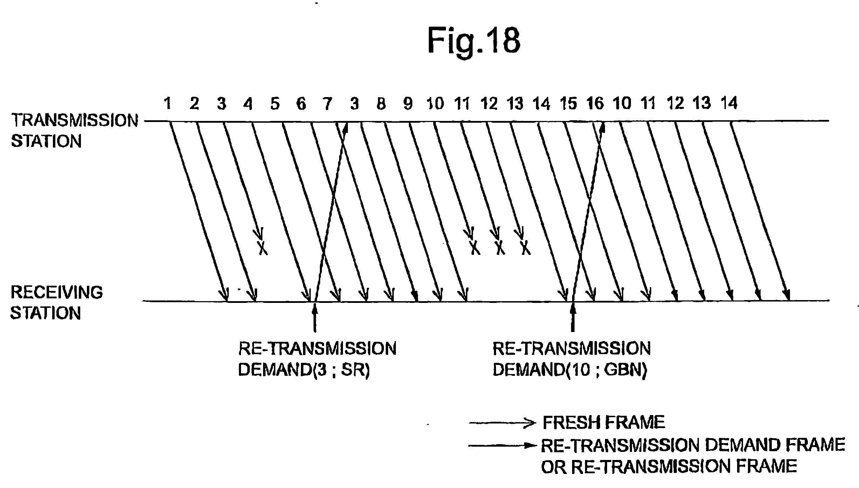

Fig. 18 is a timing diagram showing a timing of data transmission in a data transmission system proposed in Japanese Patent Laid-Open No. 108632/1987, in which re-transmission is implemented in the SR method in the case where the number, in which frames involving an error are consecutive, is less than a specified value, and in the GBN mode, in the case where the number, in which frames involving an error are consecutive, is equal to or more than the specified value.

In addition, such specified value is 3 here.

An explanation will be given below to an action with reference to Fig. 18.

A transmission station divides data to create frames with transmission numbers, and adds error detection bits to such frames to transmit the same. A receiving station performs detection of an error whenever receiving such frames, and checks transmission numbers with respect to only frames free of an error. Judging that frames have disappeared in the case where discontinuity occurs in transmission numbers having been checked, re-transmission is demanded.

In Fig. 18, errors generate in a frame "3" and frames "10" to "12", and a receiving station can know generation of respective errors upon reception of a frame "4" and a frame "13". In this case, having known that the frame "3" could not be received upon reception of the frame "4", the receiving station demands re-transmission in the SR mode since the number of frames, in which errors generate successively, (referred below to as "number of consecutive error frames") is 1 and smaller than the specified value 3. Also, having known that the frames "10", "11", "12" could not be received upon reception of the frame "13", the receiving station demands re-transmission in the GBN mode since "number of consecutive error frames" is 3 and is equal to or more than the specified value 3.

In this manner, a data transmission system having a less required buffer can be realized by basically acting in the SR mode, which is excellent in throughput characteristics, and changing over to the GBN mode in the case where the number of consecutive error frames becomes equal to or more than a specified value.

However, while such data transmission system performs changeover of modes of re-transmission depending upon whether the number of consecutive error frames is equal to or more than a specified value or less than the specified value, it is indefinite how to set an optimum specified value. Also, since the status of a transmission line varies every moment during transmission & reception of data and the specified value itself differs in an optimum value depending upon the status of a transmission line, there are caused some cases, in which the respective advantages of the SR mode and the GBN mode cannot be put to use.

For example, in the case where the specified value n1 is placed in the relation n1>k when a maximum value of the number of consecutive error frames is k in the transmission line within a certain period of time, no action is made in the GBN mode and an action is always made in the SR mode, thus leading to an increase in a required buffer, which constitutes the above-mentioned disadvantage of the SR mode.

Also, it is assumed, for example, a state, in which a transmission line in a direction toward a transmission station from a receiving station is poor in quality and so a re-transmission demand frame or frames are hard to reach the transmission station. Here, in the case where consecutive frame errors are detected in the receiving station and although the number of such consecution x is large, a specified value n2 is set so as to meet n2>x, x re-transmission demand frames, to which identifiers of SR are applied, are transmitted. In this case, the probability of all the x re-transmission demand frames reaching the transmission station becomes very low in a state, in which errors generate in re-transmission demand frames as assumed first and transmission does not reach the transmission station in high probability. In the case where a re-transmission demand frame does not reach, a re-transmission demand frame for a frame of the same transmission number will be again issued with a certain period of time left therebetween. Accordingly, there is resulted a problem that delay of data becomes great.

Further, there is assumed, for example, a case, in which two facing stations A, B are not discriminated between a transmission station and a receiving station and forward data independently of each other, that is, either of the stations serves as a transmission station, which transmits a frame (referred below to as fresh frame) transmitted freshly and a frame (referred below to as re-transmission frame) re-transmitted on the basis of a re-transmission demand as well as a receiving station for transmitting a re-transmission demand frame. In the case where the B station detects consecutive frame errors and although the number y of consecution is great, a specified value n3 is set to meet n3>y, it is required that the B station transmit y re-transmission demand frames, on which identifiers of SR are set. However, there is caused a problem in the case where it is demanded to transmit a fresh frame to the A station from the B station at the same time. In the case where the y re-transmission demand frames were temporarily made preferential, transmission of the fresh frame would be delayed to lead to a delay in data in a direction toward the A station from the B station. Conversely, in the case where the fresh frame were temporarily made preferential, a time, at which the re-transmission demand frames reach, would be late, so that a time, for which frames being re-transmitted in a direction toward the B station from the A station are delayed, would be prolonged.

Also, a round trip delay is a duration elapsed from an initial point, at which a transmission station transmits a certain frame, until a receiving station recognizes an error in the frame to issue a re-transmission demand frame and the transmission station receives the re-transmission demand frame to re-transmit the same frame. It is assumed, for example, a state, in which such round trip delay is great. In the GBN mode, since all frames including and succeeding an error frame are re-transmitted upon request of re-transmission, frames transmitted during such round trip delay are wasted to lower the throughput, and in the case of a great round trip delay, an amount of such lowering becomes very large. At this time, with a specified value set small, GBN is frequently actuated to lower the throughput exceedingly.

Also, it is assumed, for example, that respective stations have a small buffer. At this time, in the case where re-transmission in the SR mode frequently occurs, there are generated a number of frames, which must be stored and kept, thus resulting overflow of buffer. In the case where overflow of buffer is caused, frames must be discarded, which leads to a problem of reduction in throughput. In the case where re-transmission is temporarily made in the GBN mode under the same condition, a small buffer does not present a problem since there is no need of storing and keeping frames as described above. Stated further, taking account of the case where a specified value is set small, for example, 1 in a transmission line, in which consecutive frame errors are dominant, even when GBN is started at all times, times of starting the GBN is small due to consecution of errors in a transmission line, in which consecutive frame errors are dominant, as compared with a transmission line, which has the same rate of frame errors and in which a single frame error is dominant, so that the number of frames being discarded wastefully is reduced to result in less reduction in throughput, as compared with the case where a large specified value is set and action is made in the SR mode. Also, taking account of discarding of frames due to the above-mentioned overflow in SR mode, the GBN mode is in some cases excellent in throughput characteristics. At such time, there is a need of setting an appropriate specified value in view of a transmission line, but the prior art makes no mention of any method of setting a specified value.

The invention has been thought of to solve the above-mentioned problems, and has its object to provide a data transmission system, which has functions of the SR mode and the GBN mode, and can realize re-transmission in a more optimum one of the SR mode and the GBN mode according to a status of data transmission when frame errors are detected.

### DISCLOSURE OF THE INVENTION

In a data transmission system according to the invention, a second station comprises detection means for detecting error frames among a frame or frames, which cannot be received normally, judgment means for judging whether the number of error frames being consecutive is equal to or more than a threshold, threshold setting means for setting the threshold on the basis of a status of transmission associated with the first station and a second station, and re-transmission demanding means for transmitting to the first station a re-transmission demand frame, which demands re-transmission of all frames numbered subsequent to a specified transmission number, in the case where the number of error frames being consecutive is equal to or more than the threshold, and for transmitting to the first station a re-transmission demand frame, which demands re-transmission of a frame having a specified transmission number, in the case where the number of the error frames being consecutive is less than the threshold.

Also, according to the invention, the above-mentioned threshold setting means sets a threshold on the basis of the number, in which error frames generated in the past are consecutive.

Also, according to the invention, the above-mentioned threshold is an average of the number, in which error frames generated in the past are consecutive.

Also, according to the invention, the above-mentioned threshold setting means sets a threshold in accordance with a rate of errors, which are generated in the past without consecution.

Also, in a data transmission system according to the invention, a second station comprises detection means for detecting error frames among a frame or frames, which are transmitted from a first station and cannot be received normally, judgment means for judging whether the number of error frames being consecutive is equal to or more than a threshold, threshold setting means for setting the threshold on the basis of a status of transmission associated with the first station and the second station, and re-transmission demanding means for transmitting to the first station a re-transmission demand frame, which demands re-transmission of all frames numbered subsequent to a specified transmission number, in the case where the number of error frames being consecutive is equal to or more than the threshold, and for transmitting to the first station a re-transmission demand frame, which demands re-transmission of a frame having a specified transmission number, in the case where the number of the error frames being consecutive is less than the threshold.

Also, according to the invention, the above-mentioned first station comprises first transmission means for transmitting a transmission-status frame indicative of a status of generation of error frames, which cannot be normally received, among a frame or frames transmitted from a second station, and threshold setting means sets a threshold in accordance with the transmission-status frame.

Also, according to the invention, the above-mentioned first transmission means transmits a transmission-status frame indicative of failure in the case where the frequency, at which error frames generate, is equal to or more than a specified value as predetermined, and a transmission-status frame indicative of favorableness in the case where the frequency, at which error frames generate, is less than a specified value, and wherein the above-mentioned threshold setting means sets a threshold to be large in the case of receiving a transmission-status frame indicative of favorableness as compared with the case of receiving a transmission-status frame indicative of failure.

Also, according to the invention, the above-mentioned second station comprises a transmission buffer for temporarily storing frames as divided, and comprises second transmission means for transmitting a frame or frames stored in a transmission buffer, and wherein the above-mentioned threshold setting means sets a threshold in accordance with the number of frames stored in the buffer.

Also, in a data transmission system according to the invention, a second station comprises detection means for detecting error frames among a frame or frames, which cannot be received normally, judgment means for judging from a status of generation of error frames whether a single frame error is dominant or successive frame errors are dominant, threshold setting means for setting a threshold on the basis of the judgment, and re-transmission demanding means for transmitting to a first station a re-transmission demand frame, which demands re-transmission of all frames numbered subsequent to a specified transmission number, in the case where the number of the error frames being consecutive is equal to or more than the threshold, and for transmitting to the first station a re-transmission demand frame, which demands re-transmission of a frame having a specified transmission number, in the case where the number of the error frames being consecutive is less than the threshold.

### BRIEF DESCRIPTION OF THE DRAWINGS

Fig, 1 is a block diagram showing the constitution of a transmission system.
Fig. 2 is a flowchart showing an action at the time of detection of an error in Embodiment 1.
Fig. 3 is a timing diagram showing an action in the first embodiment.
Fig. 4 is a flowchart showing an action of setting a GBN start threshold in Embodiment 2.
Fig. 5 is a flowchart showing an action at the time of detection of an error in Embodiment 2.
Fig. 6 is a flowchart showing an action at the time of detection of an error in Embodiment 3.
Fig. 7 is a timing diagram showing an action in Embodiment 3.
Fig. 8 is a flowchart showing an action of setting a GBN start threshold in Embodiment 3.
Fig. 9 is a timing diagram showing an action in Embodiment 4.
Fig. 10 is a flowchart showing an action at the time of detection of an error in Embodiment 5.
Fig. 11 is a timing diagram showing an action in Embodiment 5.
Fig. 12 is a flowchart showing an action of setting a GBN start threshold in Embodiment 5.
Fig. 13 is a view showing the relationship between throughput and round slip delay in the GBN mode.
Fig. 14 is a flowchart showing an action at the time of detection of an error in Embodiment 6.
Fig. 15 is a flowchart showing an action of setting a GBN start threshold in Embodiment 6.
Fig. 16 is a view showing the throughput characteristics, in which the GBN start threshold is changed.
Fig. 17 is a timing diagram showing an action in Embodiment 7.
Fig. 18 is a timing diagram showing an action in a conventional transmission system.

### BEST MODE FOR CARRYING OUT THE INVENTION

An explanation will be given below to the best mode for carrying out the invention.

### Embodiment 1

In a transmission system in the embodiment 1, the number of consecutive frame errors (referred below to as "GBN start threshold) serving as a reference for selecting the SR mode or the GBN mode in carrying out re-transmission is represented by an average of the number of consecutive frame errors in three times in the past.

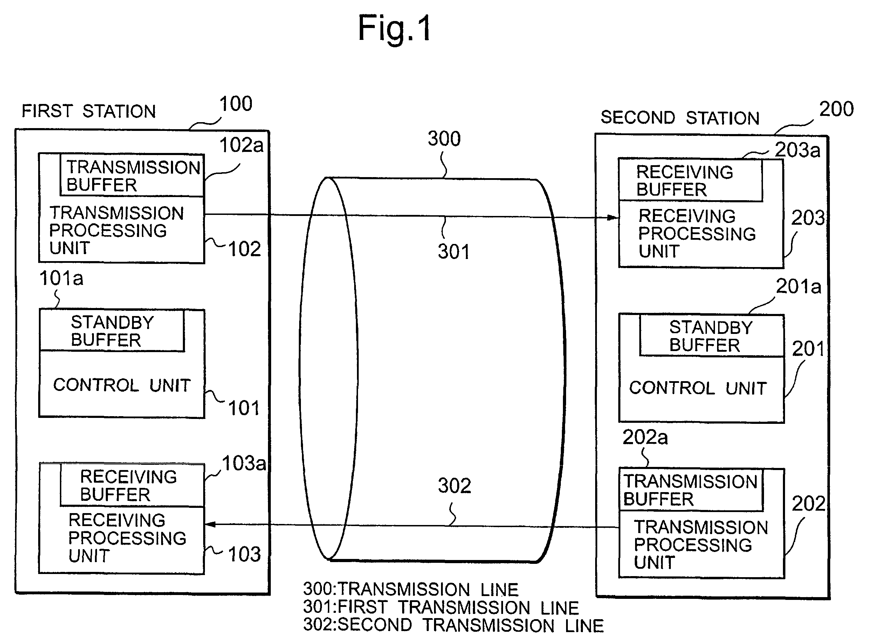

Fig, 1 is a block diagram showing the constitution of a transmission system in the invention. In Fig. 1, the transmission system is composed mainly of a first station 100, a second station 200 and a transmission line 300. Also, the first station 100 and the second station 200 are both constructed in the same manner, the first station 100 having a control unit 101, a transmission processing unit 102, and a receiving processing unit 103, and the second station 200 having a control unit 201, a transmission processing unit 202, and a receiving processing unit 203.

Further, the control unit 101 has a standby buffer 101a, the transmission processing unit 102 having a transmission buffer 102a, the receiving processing unit 103 having a receiving buffer 103a, the control unit 201 having a standby buffer 201a, the transmission processing unit 202 having a transmission buffer 202a, and the receiving processing unit 203 having a receiving buffer 203a. In addition, the respective buffers are dynamically acquired.

The transmission line 300 has a first transmission line 301, through which data is forwarded to the second station 200 from the first station 100, and a second transmission line 302, through which data is forwarded to the first station 100 from the second station 200.

An explanation will be first given to transmission & reception of frames.

For example, in the case where data is forwarded to the second station 200 from the first station 100, a transmission command is first issued from an application program or the like, and data is forwarded to the control unit 101 according to the transmission command. The control unit 101 divides the data into predetermined lengths and adds thereto sequential transmission numbers to make frames and accumulate the same in the transmission buffer 102a. Also, the transmission processing unit 102 successively reads frames accumulated in the transmission buffer 102a, adds thereto error detection bits such as CRC to forward the same to the second station 200 via the first transmission line 301.

The second station 200 first accumulates the received frames in the receiving processing unit 203 in the order of reception. Also, the receiving processing unit 203 performs an error check of CRC or the like of frames accumulated in the receiving processing unit 203 to transmit to the control unit 201 only framed free of an error. The control unit 201 aligns frames in the order of transmission numbers to generate data to deliver the same to a high-order application program (not shown).

In addition, such action is the same with the case where data is forwarded to the first station 100 from the second station 200.

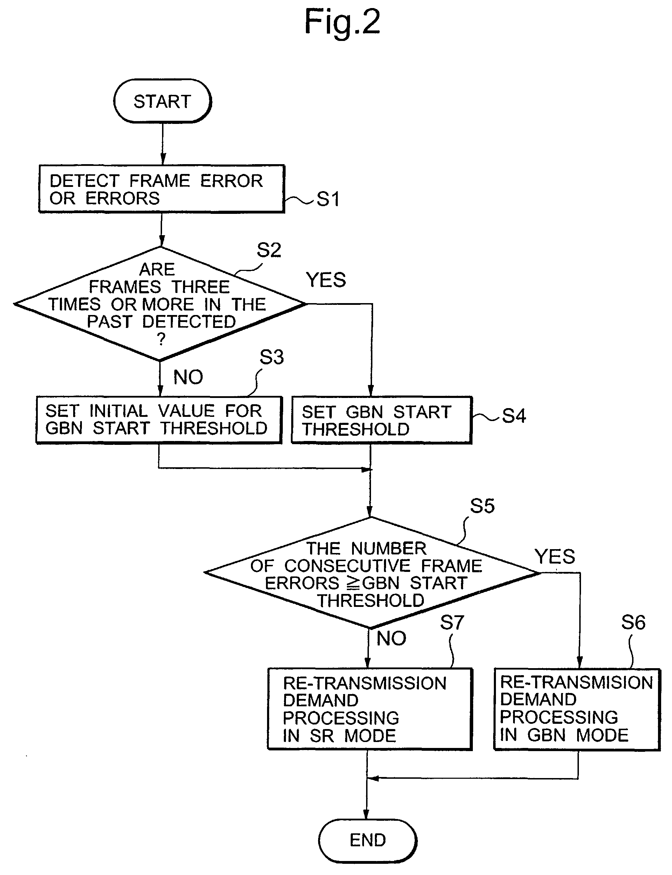

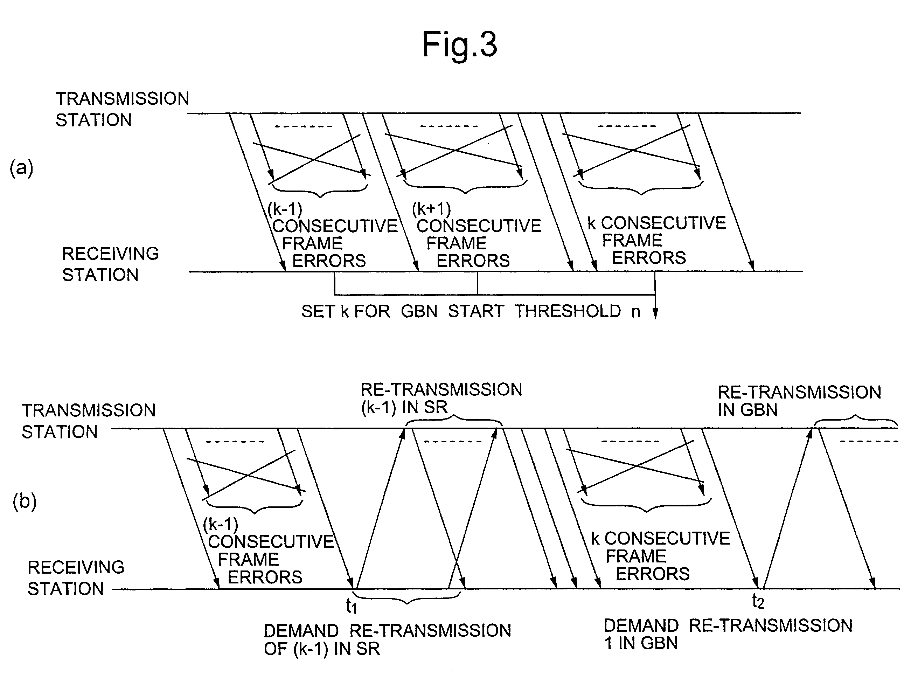

Subsequently, an explanation will be first given to a re-transmission demand action in the case where a frame error is detected in a state, in which data is forwarded to the second station 200 from the first station 100, on the basis of a flowchart in Fig. 2 and a timing diagram in Fig. 3.

First, the control unit 201 of the second station 200 receives a frame from the receiving processing unit 203 to check the transmission number of the frame, thus detecting occurrence of a frame error (STEP (referred below to as "S") 1).

In such case, it is first judged whether a frame error has been detected three times or more in the past (S2). In the case where it is judged in S2 that a frame error has not been detected three times in the past, an initial value is set as the GBN start threshold (S3).

Also, in the case where it is judged that a frame error has detected three times or more in the past, an average value obtained by averaging the number of consecutive error frames of frames errors in the last three times is set as a GBN start threshold (S4). After the GBN start threshold is set in S3 and S4, it is judged that the number of consecutive error frames this time is equal to or more than the GBN start threshold (S5). In the case where it is judged in S5 that the number of consecutive error frames is equal to or more than the GBN start threshold, the re-transmission demand processing in the GBN mode is implemented (S6). In addition, details of the re-transmission demand processing in the GBN mode are as follows. First, the control unit 201 delivers to the transmission processing unit 202 a re-transmission demand frame, to which the smallest transmission number among successive frames involving an error and a identifier of GBN are added, and the transmission processing unit 202 adds a error detection bit, such as CRC, to the same to deliver the same to the first station 100. The first station 100 receives the re-transmission demand frame and detects the identifier of GBN added to the re-transmission demand frame to successively transmit frames to the second station 200 according to the transmission numbers. In this case, the second station 200 implements an ordinary frame reception processing. In addition, those frames, of which transmission numbers (being equal to or more (m + 1)) are greater than transmission number set according to the re-transmission demand and which have been received until a frame the transmission number (for example, m) set according to the re-transmission demand is transmitted, are discarded, and accordingly the buffer 201a is not used.

Also, in the case where it is judged in S5 that the number of consecutive error frames is smaller than the GBN start threshold, the re-transmission demand processing in the SR mode is implemented (S7). In addition, details of the re-transmission demand processing in the SR mode are as follows. First, the control unit 201 delivers to the transmission processing unit 202 a re-transmission demand frame, on which the transmission number of a frame involving an error and a identifier of SR are set, and the transmission processing unit 202 adds a error detection bit, such as CRC, to the transmission processing unit to deliver the same to the first station 100. The first station 100 receives the re-transmission demand frame and detecting the identifier of SR added to the re-transmission demand frame, transmits a frame having that transmission number, which is added to re-transmission demand frame to the second station 200. The second station 200 implements a series of processings, in which the frame is received and confirmed, every transmission number of a frame involving an error. In addition, frames not based on those re-transmission demands having been forwarded in the meantime are accumulated and kept to be forwarded to a high-order application program or the like at the point of time when transmission numbers are assembled successively.

Such action implements the re-transmission demand processing in the SR mode since the number of consecutive error frames at the point of time t₁ in, for example, Fig. 3(b) is (k - 1) and smaller than (k - 1 + k + 1 + k)/3 in the case where the number of consecutive error frames is (k - 1), (k+1) and k in the past three times when a frame error is recognized at the point of time t₁. Also, such action implements the re-transmission demand processing in the GBN mode since the number (k + 1) of consecutive error frames at the point of time t₂ in Fig. 3(b) is equal to or more than (k + 1 + k + 1 + k)/3 in the case where the number of consecutive error frames is (k + 1), k and (k - 1) in the past three times when a frame error is recognized at the point of time t₂.

By implementing the processing in this manner, it is possible to optimize an amount ensured in the standby buffer 201a according to circumstances, under which errors are generated, and to prevent uneconomical circumstances, under which buffer is made ready for long, successive errors thought to occur in low probability.

In addition, it is conceivable that the GBN start threshold is not an average of the number of consecutive error frames in the past three times but, for example, a minimum value of the number of consecutive error frames in the past three times, a value of the highest frequency of the number of consecutive error frames in the past, or a value (the number of consecutive error frames) amounting to a cumulative probability X % by counting from the minimum value.

### Embodiment 2

While a GBN start threshold is set every detection of a frame error in Embodiment 1, for example, a GBN start threshold is not an average of the number of consecutive error frames in three times immediately before but may be preset as an average of frame errors in the past three times going back to the past from a particular point of time.

In this case, an action of setting a GBN start threshold and an action of a re-transmission demand processing are implemented independently of each other.

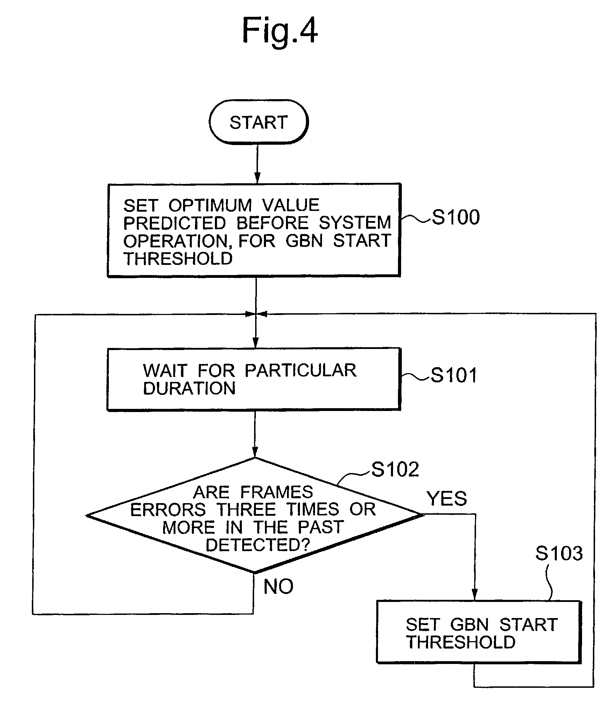

Based on a flowchart shown in Fig. 4, an explanation will be given below to an action of setting a GBN start threshold in the case where data are forwarded to the second station 200 from the first station 100.

First, at the time of start of the transmission system, the control unit 201 set a GBN start threshold to an optimum value predictable prior to the operation of the system (S100). In addition, the optimum value is determined by quality (error probability, delay or the like) demanded for services, and the moving speed of terminals. Subsequently, on standby for a particular period of time (S101), and after the lapse of a particular period of time, it is judged whether frame errors in three times or more in the past have been detected (S102). In the case where it is judged that frame errors in three times or more are not detected in S102, the processing is returned to S101. Also, in the case where it is judged that frame errors in three times or more are detected in S102, an average of the number of consecutive error frames for frame errors occurred in three times immediately before is set as a GBN start threshold (S103), and the processing is returned to S101.

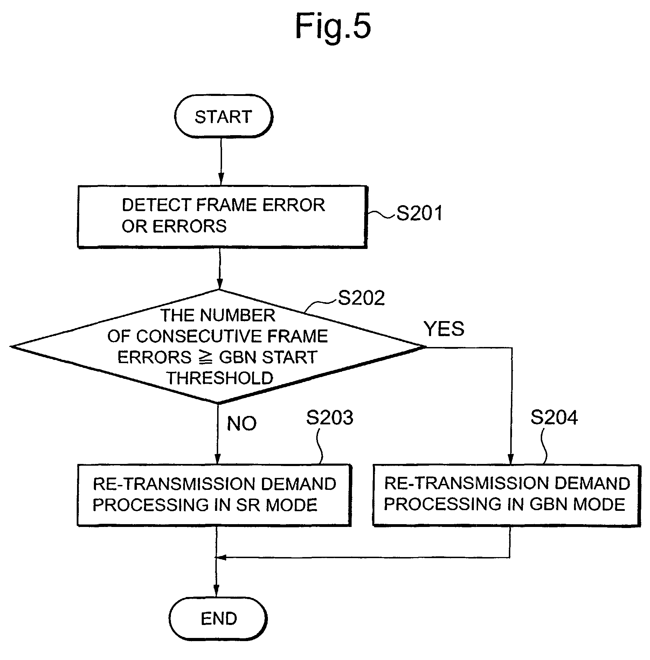

Subsequently, based on a flowchart shown in Fig. 5, an explanation will be given below to an action of the re-transmission demand processing.

First, the control unit 201 of the second station 200 receives a frame from the receiving processing unit 203 and checks its transmission number to detect the occurrence of a frame error (S201).

Subsequently, it is judged whether the number of consecutive error frames is equal to or more than the GBN start threshold (S202). In the case where it is judged that the number of consecutive error frames is less than the GBN start threshold in S202, the re-transmission demand processing in the SR mode is implemented (S203). Also, in the case where it is judged that the number of consecutive error frames is equal to or more than the GBN start threshold in S202, the re-transmission demand processing in the GBN mode is implemented (S204).

This comprises calculating an average of the number of consecutive error frames in three times going back to the past from a point of time tₒ in the case where a point of time on standby for a particular period of time S11 is t₀ in Fig. 3, and making the average a GBN start threshold. And making a comparison between the number of consecutive error frames detected at subsequent points of time t₁ and t₂ and the GBN start threshold, selection is made between a re-transmission demand processing in the SR mode and a re-transmission demand processing in the GBN mode.

Done in this manner, there is no need of calculating an average every error as occurred, and so the re-transmission demand is enhanced in speed of processing.

### Embodiment 3

In Embodiment 3, in a state, in which the first station 100 and the second station 200 perform both transmission and reception of data, line-status is transmitted regularly to the other party, and selection is made according to the line-status between a re-transmission demand processing in the SR mode and a re-transmission demand processing in the GBN mode.

In addition, the construction of this transmission system is the same as that shown in Fig. 1. The different points are the control unit 101 forwards a line-status frame, in which information indicative of failure in the second transmission line 302 is set, to the second station 200 in the case where a rate of error frames detected in a period of time is equal to or more than a predetermined value, and forwards a line-status frame, in which information indicative of favorableness in the second transmission line 302 is set, to the second station 200 in the case where the rate is less than the predetermined value. Also, in the same manner, the control unit 201 forwards a line-status frame, in which information indicative of failure in the first transmission line 301 is set, to the first station 100 in the case where a rate of error frames detected in a period of time is equal to or more than a predetermined value, and forwards a line-status frame, in which information indicative of favorableness in the first transmission line 301 is set, to the first station 100 in the case where the rate is less than the predetermined value.

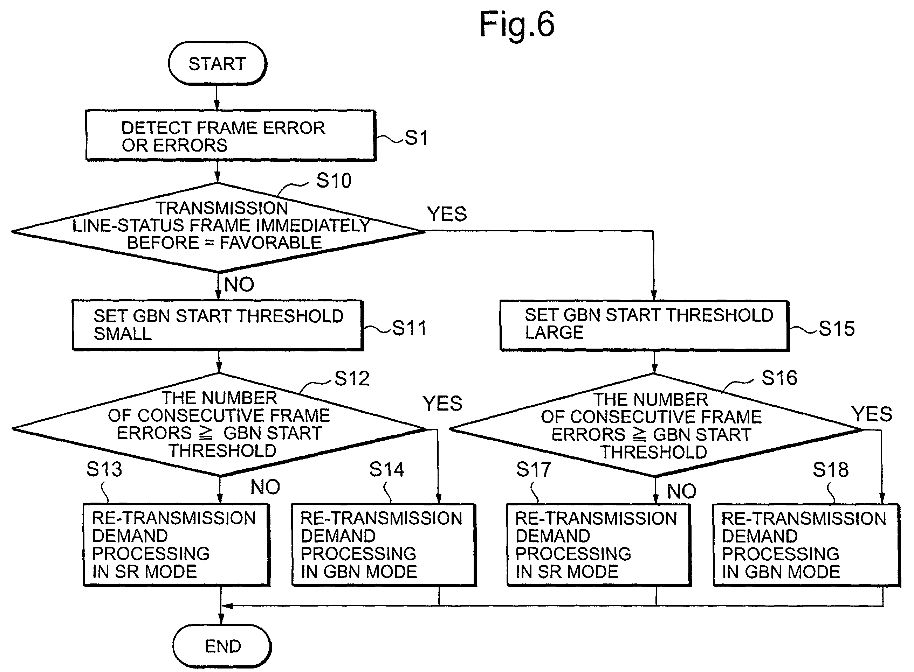

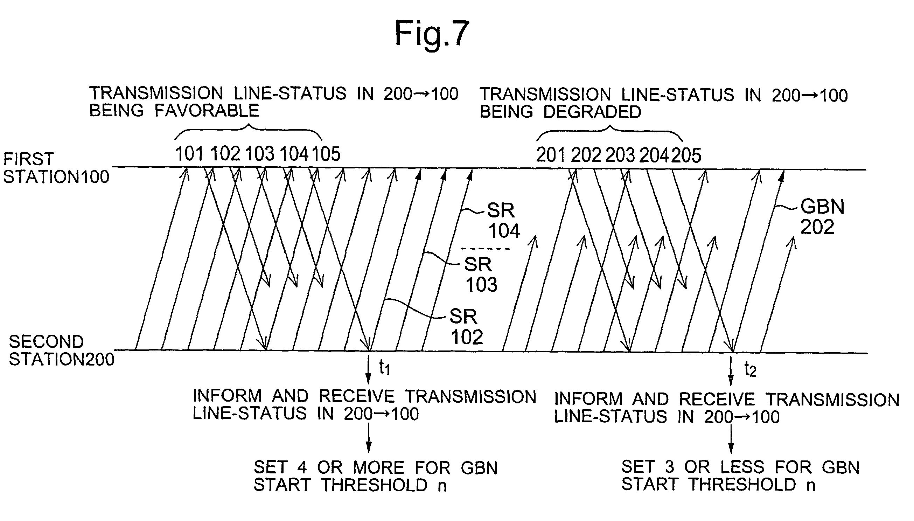

Based on a flowchart shown in Fig. 6 and a timing diagram shown in Fig. 7, an explanation will be given below to an action in the case where a frame error is detected in data transmission to the second station 200 from the first station 100.

First, the control unit 201 of the second station 200 investigates a transmission number of a received frame forwarded from the receiving processing unit 203 to detect a frame error (S1).

Subsequently, the control unit 201 judges whether information indicative of favorableness is set in line-status received immediately before (S10). Hereupon, in the case where information indicative of failure is set, a GBN start threshold is set to be small (S11). This is because by performing the re-transmission demand processing in GBN if possible, it is desired to reduce the number of re-transmission demand frames being forwarded to the first station 100 from the second station 200, and, for example, the number of re-transmission demand frames may be set by beforehand determining a specified value and multiplying the same by a coefficient 0.5 or so. Subsequently, it is judged whether the number of consecutive error frames is equal to or more than the GBN start threshold (S12). In the case where it is judged that the number of consecutive error frames is less than the GBN start threshold in S12, the re-transmission demand processing in the SR mode is implemented (S13). Also, in the case where the number of consecutive error frames is equal to or more than the GBN start threshold in S12, the re-transmission demand processing in the GBN mode is implemented (S14).

Also, in the case where it is judged that information indicative of favorableness is set in S10, a GBN start threshold is set to be large (S15). This is because throughput is desired to take preference, and, for example, setting may be made by beforehand determining a specified value and multiplying the same by a coefficient 1.5 or so. Subsequently, it is judged whether the number of consecutive error frames is equal to or more than the GBN start threshold (S16). In the case where it is judged that the number of consecutive error frames is less than the GBN start threshold in S16, the re-transmission demand processing in the SR mode is implemented (S17). Also, in the case where the number of consecutive error frames is equal to or more than the GBN start threshold in S16, the re-transmission demand processing in the GBN mode is implemented (S18).

This comprises detecting the occurrence of an error in three frames, of which the transmission number is 102, 103, 104, when a frame of the transmission number 105 is received at the point of time t₁ in, for example, Fig. 7. Also, the first station 100 transmits a transmission line-status frame, in which information indicative of favorableness is set supposing that the second transmission line 302 is in a favorable state since there is no error in a frame transmitted to the first station 100 from the second station 200, in the same timing as that of transmission of a frame of the transmission number 105. In this case, the second station 200 implements the re-transmission demand processing in the SR mode because the GBN start threshold is set large, thus 4 here, and the number of consecutive error frames is 3.

Also, the occurrence of an error in three frames, of which the transmission number is 202, 203, 204, is detected when a frame of the transmission number 205 is received at the point of time t₂. Since errors occur frequently in frames transmitted to the first station 100 from the second station 200, however, the first station 100 transmits a transmission line-status frame, in which information indicative of failure is set supposing that the second transmission line 302 is in an unfavorable state, in the same timing as that of transmission of a frame of the transmission number 205. In this case, the second station 200 implements the re-transmission demand processing in the GBN mode because the GBN start threshold is set small, thus 3 here, and the number of consecutive error frames is 3.

In this manner, by monitoring a transmission line-status in a direction, in which the re-transmission demand frame is transmitted, and decreasing a GBN start threshold in the event of a transmission path, in which the re-transmission demand frame is transmitted, being deteriorated, the frequency, at which transmission of the re-transmission demand frame occurs, is suppressed to decrease the occurrence of a phenomenon that the re-transmission demand frame does not reach the other party, and in the event of a transmission path, in which the re-transmission demand frame is transmitted, being favorable, a GBN start threshold is enlarged to increase the frequency, at which transmission of the re-transmission demand frame occurs in the SR mode, thus enabling the throughput performance.

In addition, while a GBN start threshold is set here by checking whether a line-status is favorable or not, whenever a frame error is detected, the processing of setting the GBN start threshold and the re-transmission demand processing may be made independent of each other.

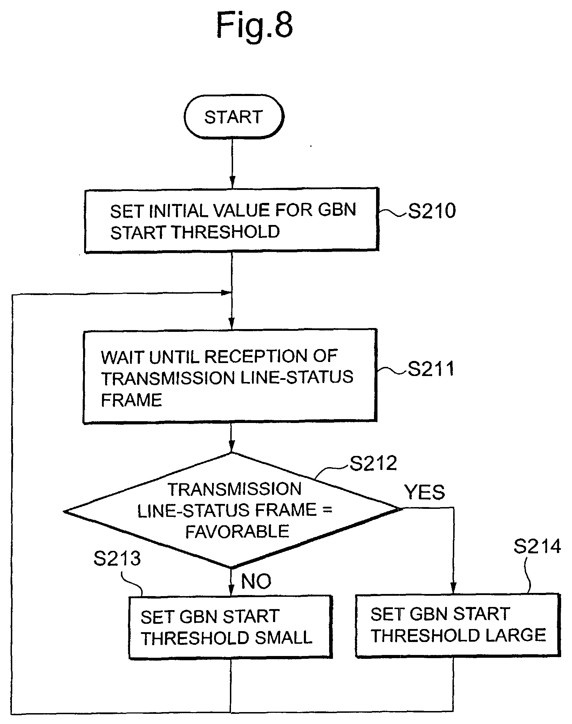

Fig. 8 is a flowchart showing an action of setting a GBN start threshold.

First, an initial value is set for a GBN start threshold at the start of the transmission system (S210). Subsequently, reception of a transmission line-status frame from the first station 100 is waited for (S211). Here, in the case where a transmission line-status frame is received, it is judged whether information indicative of favorableness is set in the transmission line-status frame (S212). Here, in the case where it is judged that information indicative of favorableness is not set, a GBN start threshold is set small (S213), and on the other hand, in the case where it is judged that information indicative of favorableness is set, a GBN start threshold is set large (S214).

In addition, an action at the time of detection of a frame error is the same as that shown in Fig. 7.

In this manner, it is unnecessary to judge a transmission line-status whenever an error occurs, and so the re-transmission demand processing is enhanced in speed of processing.

### Embodiment 4

In Embodiment 4, re-transmission demand frames, to which identifiers of GBN are added, are successively transmitted a plurality of times in the re-transmission demand processing in the GBN mode in S14 and S18 in Fig. 6.

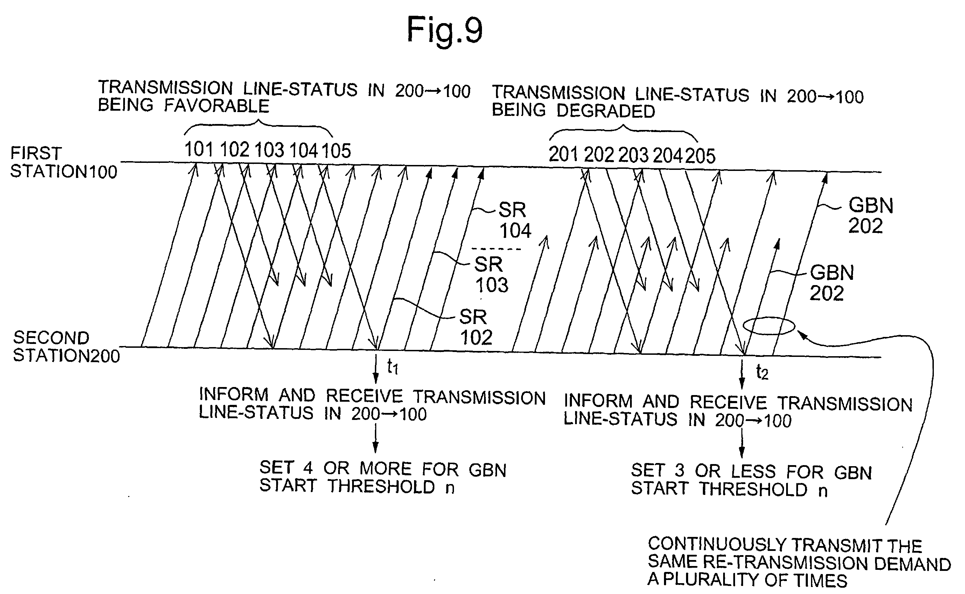

Fig. 9 is a timing diagram in this case, and is different from a timing diagram of Fig. 7 in that re-transmission demand frames, to which identifiers of GBN are added, are successively transmitted two times at the point of time t₂.

In this manner, even when a transmission line-status in a direction, along which re-transmission demand frames are transmitted, is unfavorable, the probability that re-transmission demand frames can be forwarded to the first station 100 becomes high.

In addition, the control unit of the first station 100 and the control unit of the second station 200 must implement the processing of bypassing re-transmission demand frames forwarded later in the case where same re-transmission demand frames are forwarded within a particular period of time.

### Embodiment 5

In Embodiment 5, a GBN start threshold is set in conformity with an amount of data in transmission in a state, in which the first station 100 and the second station 200 implement both transmission & reception of data.

In addition, the construction of this transmission system is the same as that shown in Fig. 1 but is different therefrom in that the control unit 101 and the control unit 201 monitor a data transmission line-status and set a GBN start threshold according to the line-status.

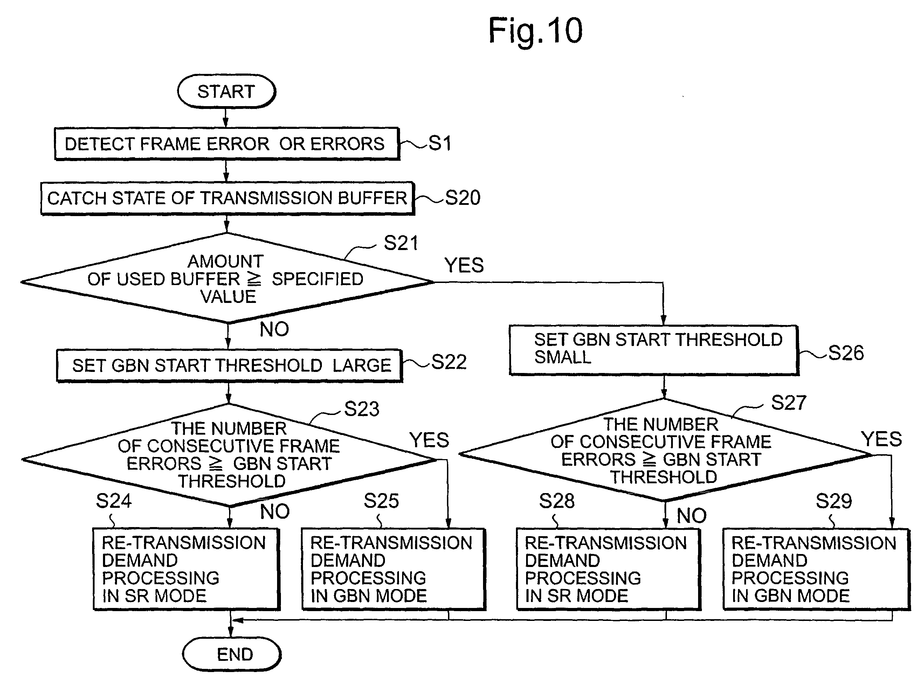

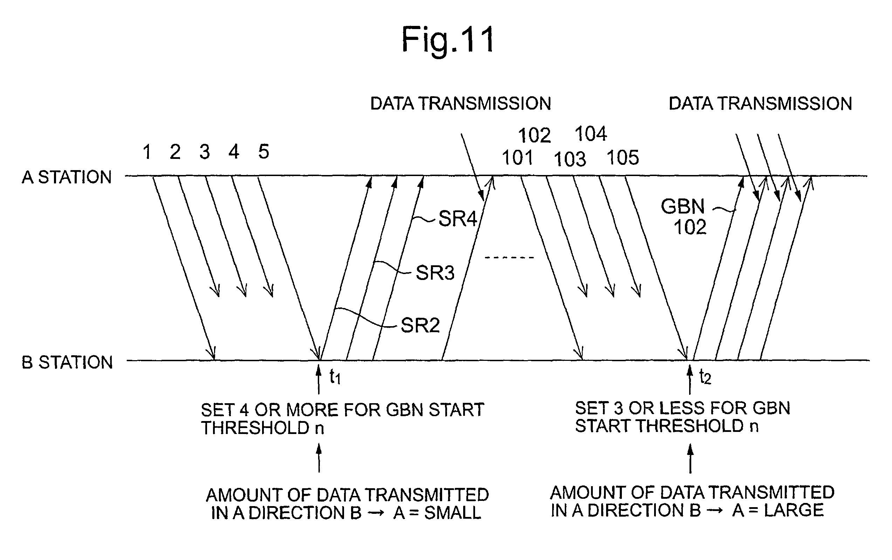

Subsequently, based on a flowchart shown in Fig. 10 and a timing diagram shown in Fig. 11, an explanation will be given to an action of detecting a frame error in the case where data are forwarded to the second station 200 from the first station 100.

First, the control unit 201 of the second station 200 investigates a transmission number of a frame received from the receiving processing unit 203 to detect a frame error (S1).

Subsequently, a state of the transmission buffer 202a is caught (S20). This state means an amount of use in the transmission buffer 202a. Subsequently, it is judged whether an amount of use in the transmission buffer 202a is equal to or more than a specified value (S21). Here, in the case where it is judged that an amount of use in the transmission buffer 202a is less than the specified value, a GBN start threshold is set to be large since frames forwarded to the first station 100 from the second station 200 are scarce and can be estimated to have less influence on frame transmission to the first station 100 from the second station 200 even when the number of re-transmission demand frames is increased to some extent (S22). Subsequently, it is judged whether the number of consecutive error frames is equal to or more than the GBN start threshold (S23). Here, in the case where it is judged that the number of consecutive error frames is less than the GBN start threshold, the re-transmission demand processing is implemented in the SR mode (S24). Also, in the case where it is judged that the number of consecutive error frames is equal to or more than the GBN start threshold, the re-transmission demand processing is implemented in the GBN mode (S25).

Also, in the case where it is judged in S21 that an amount of use in the buffer is equal to or more than the specified value, a GBN start threshold is set to be small since frames forwarded to the first station 100 from the second station 200 are many and can be estimated to have much influence on frame transmission from the second station 200 (S26). Subsequently, it is judged whether the number of consecutive error frames is equal to or more than the GBN start threshold (S27). Here, in the case where it is judged that the number of consecutive error frames is less than the GBN start threshold, the re-transmission demand processing is implemented in the SR mode (S28). Also, in the case where it is judged that the number of consecutive error frames is equal to or more than the GBN start threshold, the re-transmission demand processing is implemented in the GBN mode (S29).

This comprises detecting the occurrence of an error in three frames, of which the transmission number is 2, 3, 4, when a frame of the transmission number 5 is received at the point of time t₁ in, for example, Fig. 11. Also, since there is almost no frame forwarded to the first station 100 from the second station 200, a GBN start threshold is set 4, and re-transmission demand frames, to which a identifier of SR and the transmission number are added, are transmitted three times because the number of consecutive error frames is 3. Also, the occurrence of an error in three frames, of which the transmission number is 102, 103, 104, is detected when a frame of the transmission number 105 is received at the point of time t₂. Also, since frames forwarded to the first station 100 from the second station 200 are existent in abundance, a GBN start threshold is set 3, and re-transmission demand frames, to which identifiers of GBN are added, is transmitted one time because the number of consecutive error frames is 3.

Thus, since a GBN start threshold is set judging from an amount of frames being forwarded, such that a GBN start threshold is set to a small value to decrease the number of re-transmission demand frames in the event of an amount of data transmission being much, the need of transmitting many re-transmission demand frames is prevented from occupying a transmission band in a direction, in which re-transmission demand is to be transmitted, and causing delay due to incapability of implementing an ordinary data transmission. Also, in the case where data transmission is small in amount, a GBN start threshold is set to be large, so that re-transmission can be carried out in the SR method and so throughput is enhanced.

In addition, while a state of use of the transmission buffer is examined whenever a frame error is detected, and then a GBN start threshold is set, the processing of setting the GBN start threshold and the re-transmission demand processing may be made independently of each other in such case because services of keeping a constant speed are provided when data are generated.

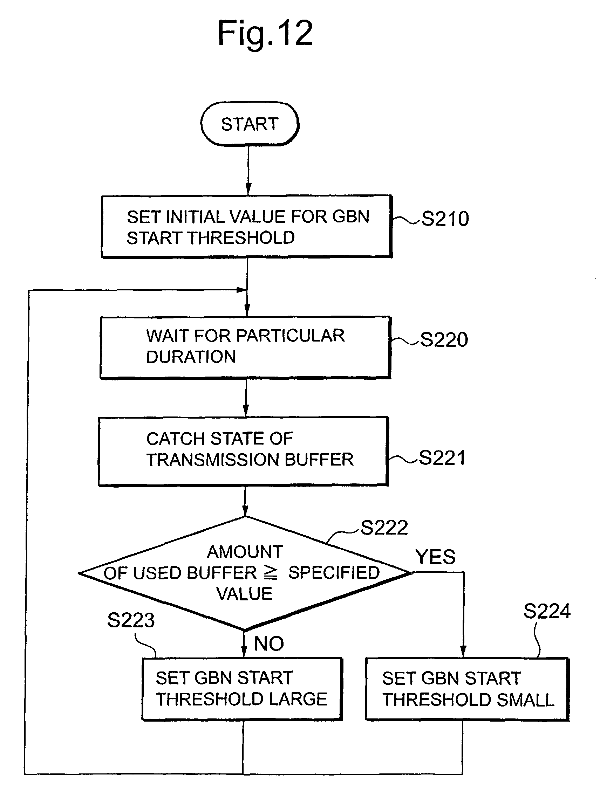

Fig. 12 is a flowchart showing an action of setting a GBN start threshold.

First, an initial value is set for a GBN start threshold at the start of the transmission system (S210). Subsequently, a predetermined period of time is waited (S220), and then a state of the transmission buffer 202a is caught (S221). Subsequently, it is judged whether an amount of use in the buffer is equal to or more than a specified value (S222). Here, in the case where it is judged that an amount of use in the buffer is less than the specified value, a GBN start threshold is set to be large (S223). Also, in the case where it is judged that an amount of use in the buffer is equal to or more than the specified value in S222, a GBN start threshold is set to be small (S224). In addition, after the processing in S223 and S224 is done, it is again returned to S220.

In addition, an action at the time of detection of a frame error is the same as that shown in Fig. 5.

In this manner, it is unnecessary to judge a state of use in the transmission buffer whenever an error occurs, and so the re-transmission demand processing is enhanced in speed of processing.

### Embodiment 6

In Embodiment 6, a GBN start threshold is set in accordance with a status of a round trip delay.

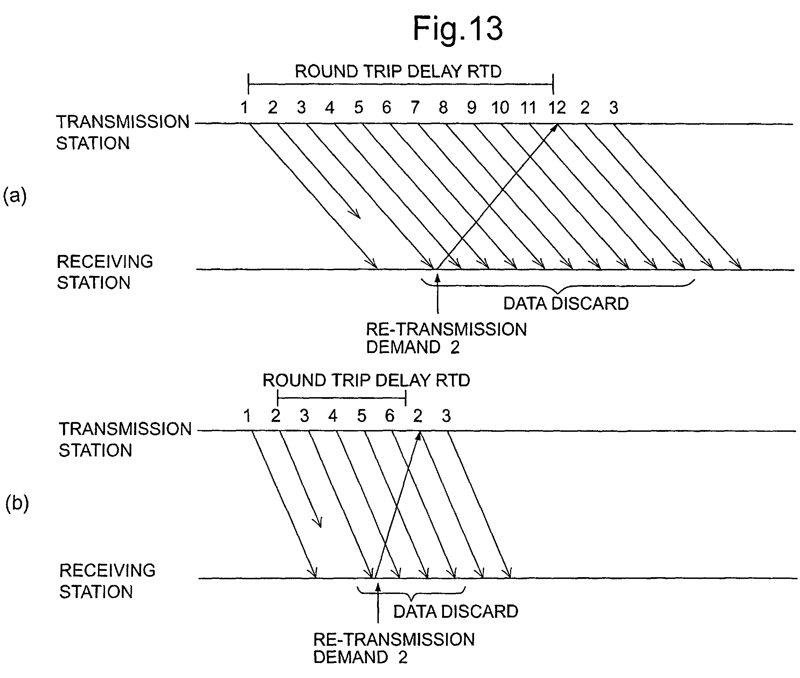

Incidentally, the round trip delay indicates a time elapsed until a re-transmission demand frame is received due to the occurrence of an error in a frame after a transmitting station transmits the frame, and is dependent upon speeds of transmission & reception in respective stations, a transmission range between two stations, which perform communication, and a status of load in a station. Fig. 13 is a view showing the relationship between throughput and round slip delay in the GBN mode, Fig. 13(a) showing an example, in which a round trip delay is large, and Fig. 13(b) showing an example, in which a round trip delay is small. In the GBN mode, when a re-transmission demand frame is received, a frame given the transmission number set on the re-transmission demand frame and the following frames are forwarded back. That is, frames duly received after an error frame is also discarded in a receiving station. In this respect, the throughput characteristics is inferior to that in the SR mode, but the number of frames being discarded becomes very large in the case where a round trip delay is great as in Fig. 13(a). Meanwhile, in an example shown in Fig. 13(b), only frames 3 to 6 suffice to be discarded. As seen from the above, when the GBN mode is implemented in the case where a round trip delay is great, the number of frames being wastefully discarded becomes large to cause considerable reduction in throughput.

Accordingly, in Embodiment 6, in the case of a round trip delay being great, a GBN start threshold is set small, and in the case of a round trip delay being small, a GBN start threshold is set great.

In addition, the construction of this transmission system is the same as that shown in Fig. 1 but is different therefrom in that when receiving a re-transmission demand frame, the control unit 101 and the control unit 201 set in accordance with the re-transmission demand, a round trip delay on a frame being transmitted to transmit the same, and that a GBN start threshold is set in accordance with a round trip delay in the received frame.

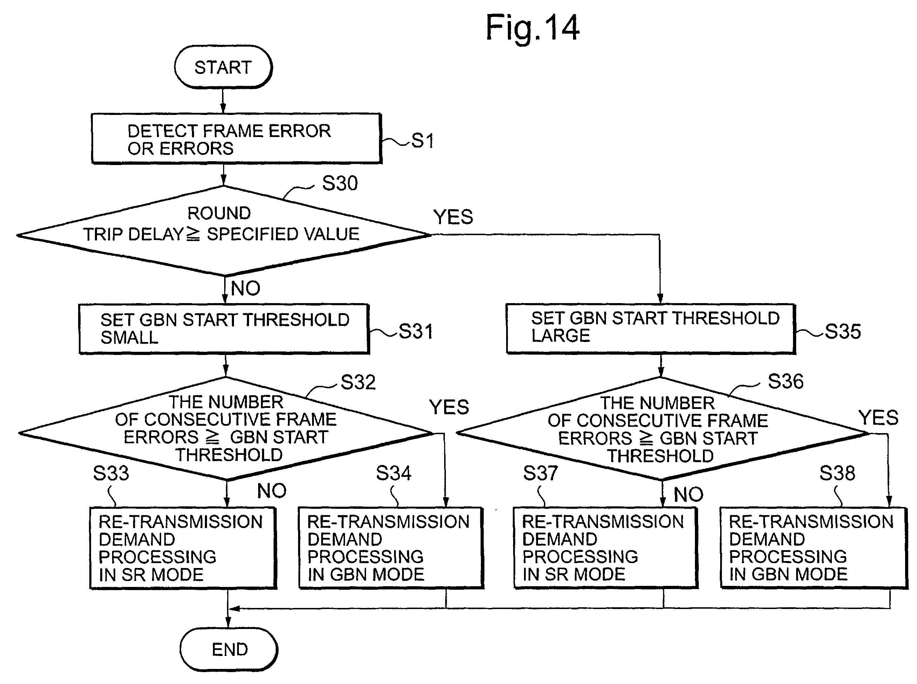

Subsequently, based on a flowchart shown in Fig. 14, an explanation will be given to an action of detecting a frame error when data are forwarded to the second station 200 from the first station 100.

First, the control unit 201 of the second station 200 investigates the transmission number of a frame forwarded from the receiving processing unit 203 to detect a frame error (S1).

Subsequently, it is judged whether a round trip delay in a frame stored in the control unit 201 and re-transmitted according to a re-transmission demand frame transmitted in the last time is equal to or more than a specified value (S30). Here, in the case where it is judged that the round trip delay is less than the specified value, a GBN start threshold is set to be small (S31). Subsequently, it is judged whether the number of consecutive error frames is equal to or more than the GBN start threshold (S32). Here, in the case where it is judged that the number of consecutive error frames is less than the GBN start threshold, the re-transmission demand processing is implemented in the SR mode (S33). Also, in the case where it is judged that the number of consecutive error frames is equal to or more than the GBN start threshold, the re-transmission demand processing is implemented in the GBN mode (S34).

Also, in the case where it is judged that the round trip delay is equal to or more than the specified value, a GBN start threshold is set to be great (S35). Subsequently, it is judged whether the number of consecutive error frames is equal to or more than the GBN start threshold (S36). Here, in the case where it is judged that the number of consecutive error frames is less than the GBN start threshold, the re-transmission demand processing is implemented in the SR mode (S37). Also, in the case where it is judged that the number of consecutive error frames is equal to or more than the GBN start threshold, the re-transmission demand processing is implemented in the GBN mode (S38).

In this manner, when a round trip delay is great, a GBN start threshold is set to be large, and when a round trip delay is small, a GBN start threshold is set to be small, whereby it is possible to prevent great reduction in throughput.

In addition, while the round trip delay in the re-transmission demand processing in the last time is compared with a known value whenever a frame error is detected, and a GBN start threshold is thus set, the processing of setting the GBN start threshold and the re-transmission demand processing may be made independent of each other.

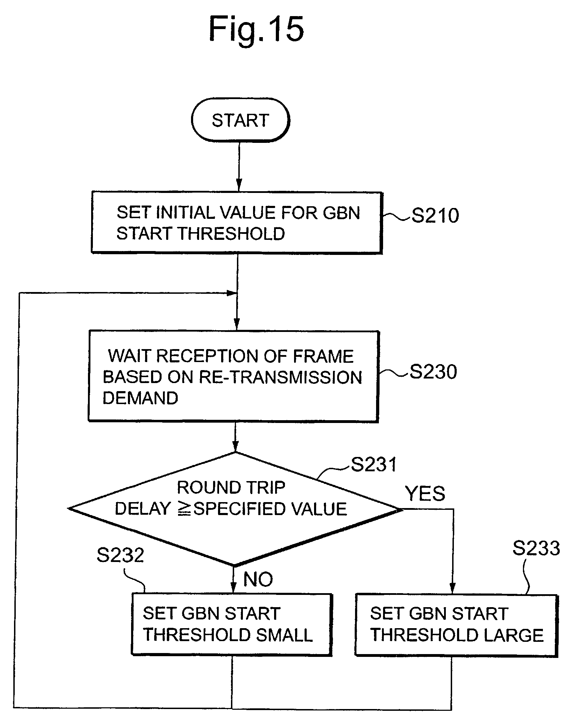

Fig. 15 is a flowchart showing an action of setting a GBN start threshold.

First, an initial value is set for a GBN start threshold at the start of the transmission system (S210). Subsequently, a frame based on a re-transmission demand is waited for until it is received (S230), and at the time of reception, it is judged whether a round trip delay in the frame is equal to or more than a specified value (S231). Here, in the case where it is judged that the round trip delay is less than the specified value, a GBN start threshold is set to be small (S232). Also, it is judged that the round trip delay is equal to or more than the specified value, a GBN start threshold is set to be great (S233). In addition, after the processing in S232 and S233 is done, it is again returned to S230.

In addition, an action at the time of detection of a frame error is the same as that shown in Fig. 5.

In this manner, it is unnecessary to set a GRN threshold judging whether a round trip delay is equal to or more than a specified value whenever an error occurs, and so the re-transmission demand processing is enhanced in speed of processing.

### Embodiment 7

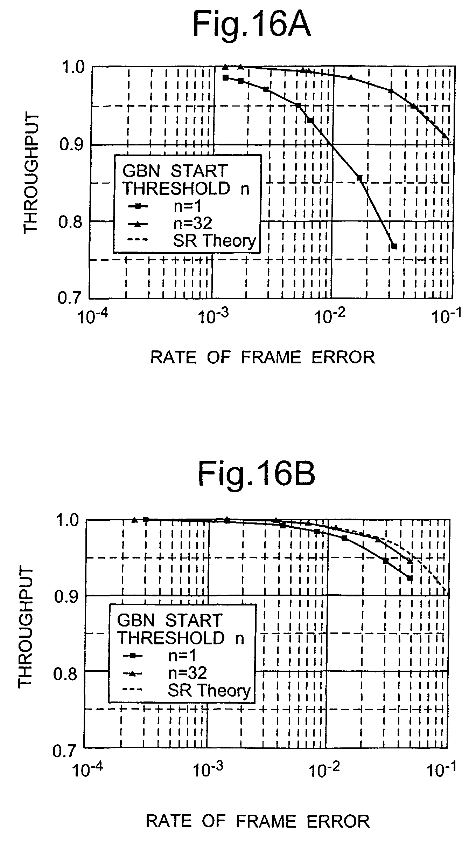

Fig. 16 is a view showing a comparison between a transmission line, in which a single frame error is dominant and a transmission line, in which successive frame errors are dominant, and the throughput characteristics in the respective lines, in which a GBN start threshold is varied. Fig. 16(a) shows a transmission line, in which a single frame error is dominant. Here, in the case of a GBN start threshold n = 32, an action is in many cases made in the SR mode, and so the throughput is substantially in accord with a theoretical value, but in the case of a GBN start threshold n = 1, an action is always made in the GBN mode, and so it is observed that the throughput markedly decreases. Fig. 16(b) shows a transmission line, in which successive frame errors are dominant. In this case, a difference in throughput between the case of n = 1 and the case of n = 32 is small as compared with that in Fig. 16(a). The reason for this is that in the case of making a comparison on the same rate of frame error, the frequency, at which a re-transmission demand is generated in the GBN mode, is reduced in a state, in which errors are consecutive, as compared with a state, in which a single error generates, whereby the number of frames being discarded wastefully although duly received is small. In addition, in Fig. 16(b), n = 32 is high in throughput as compared with n = 1 but it is conceivable that in the case where n = 32 is implemented under circumstances of small buffer capacity, frames are frequently generated, which cannot get a band sufficient for storing and keeping and therefore are discarded, whereby n = 32 and n = 1 are reversed in throughput characteristics. This demonstrates that when it is required to prevent reduction in throughput although there are restrictions in ensuring a large buffer capacity, one of measures is an active use of the GBN mode.

Accordingly, in the case where in monitoring a status of generation of frame errors, a single frame error is not almost generated and consecutive frame errors are dominant, the GBN mode may be actively made use of by setting a small value for a GBN start threshold.

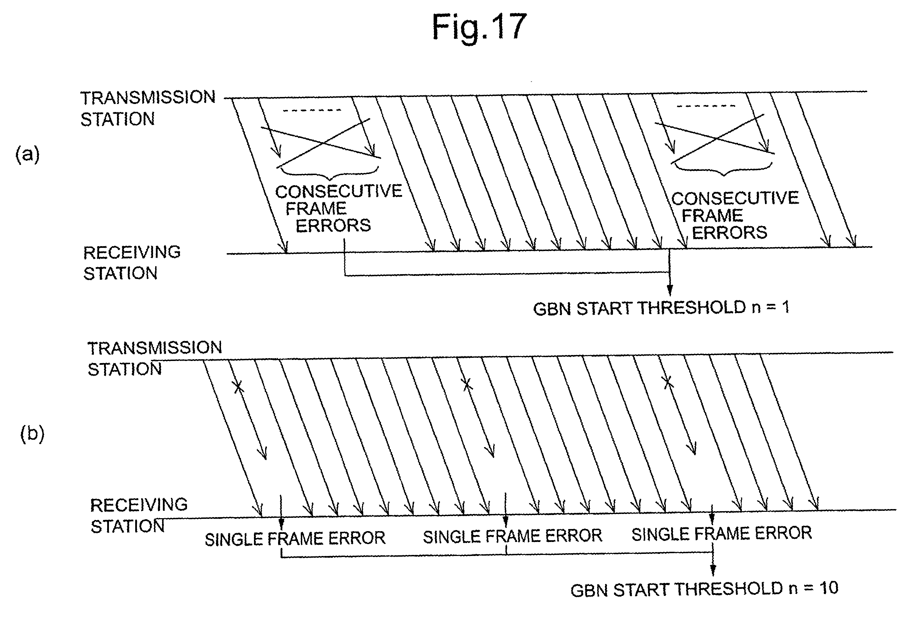

In Fig. 17, a receiving station always watches a status, in which frame errors generate. In the case where it is judged that consecutive frame errors are dominant, a small value is set for a GBN start threshold. In Fig. 17(a), 1 is set. Also, in the case where it is judged that a single frame error is dominant, a large value is set for a GBN start threshold. In Fig. 17(b), 10 is set.

In this manner, even in the case where there are restrictions in ensuring a large buffer capacity, the throughput can be maintained highest by setting a GBN start threshold small and actively using the GBN mode in a status of a transmission line, in which consecutive frame errors are dominant.

### INDUSTRIAL APPLICABILITY

As described above, the data transmission system according to the invention is good in efficiency of transmission because re-transmission can be realized in an optimum one of the SR mode and the GBN mode when a frame error is detected.

## Claims

1. A data transmission system having a first station for dividing data into one or more sections and thereafter adding sequential transmission number thereto to create a frame or frames to transmit the same, and a second station for receiving the frame or frames,
the second station comprising detection means for detecting error frames among the frame or frames, which cannot be received normally, judgment means for judging whether the number of error frames being consecutive is equal to or more than a threshold, threshold setting means for setting the threshold on the basis of a status of transmission associated with the first station and the second station, and re-transmission demanding means for transmitting to the first station a re-transmission demand frame, which demands re-transmission of all frames numbered subsequent to a specified transmission number, in the case where the number of the error frames being consecutive is equal to or more than the threshold, and for transmitting to the first station a re-transmission demand frame, which demands re-transmission of a frame having a specified transmission number, in the case where the number of the error frames being consecutive is less than the threshold.

2. The data transmission system according to claim 1, wherein the threshold setting means sets a threshold on the basis of the number, in which error frames generated in the past are consecutive.

3. The data transmission system according to claim 1, wherein the threshold is an average of the number, in which error frames generated in the past are consecutive.

4. The data transmission system according to claim 1, wherein the threshold setting means sets a threshold in accordance with a rate of errors, which are generated in the past without consecution.

5. A data transmission system having a first station for receiving a frame or frames and for dividing data into one or more sections and thereafter adding sequential transmission number thereto to create a frame or frames to transmit the same, and a second station for receiving the frame or frames, and for dividing data into one or more sections and thereafter adding sequential transmission number to create a frame or frames to transmit the same,
the second station comprising detection means for detecting error frames among the frame or frames, which are transmitted from the first station and cannot be received normally, judgment means for judging whether the number of error frames being consecutive is equal to or more than a threshold, threshold setting means for setting the threshold on the basis of a status of transmission associated with the first station and the second station, and re-transmission demanding means for transmitting to the first station a re-transmission demand frame, which demands re-transmission of all frames numbered subsequent to a specified transmission number, in the case where the number of the error frames being consecutive is equal to or more than the threshold, and for transmitting to the first station a re-transmission demand frame, which demands re-transmission of a frame having a specified transmission number, in the case where the number of the error frames being consecutive is less than the threshold.

6. The data transmission system according to claim 5, wherein the first station comprises first transmission means for transmitting a transmission-status frame indicative of a status of generation of error frames, which cannot be normally received, among a frame or frames transmitted from the second station, and the threshold setting means sets a threshold in accordance with the transmission-status frame.

7. The data transmission system according to claim 6, wherein the first transmission means transmits a transmission-status frame indicative of failure in the case where the frequency, at which error frames generate, is equal to or more than a specified value as predetermined, and a transmission-status frame indicative of favorableness in the case where the frequency, at which error frames generate, is less than the specified value, and wherein the threshold setting means sets the threshold to be large in the case of receiving a transmission-status frame indicative of favorableness as compared with the case of receiving a transmission-status frame indicative of failure.

8. The data transmission system according to claim 5, wherein the second station comprises a transmission buffer for temporarily storing frames as divided, and comprises second transmission means for transmitting a frame or frames stored in the transmission buffer, and wherein the threshold setting means sets a threshold in accordance with the number of frames stored in the buffer.

9. The data transmission system according to claim 5, wherein the second station comprises detection means for detecting a round trip delay being a time elapsed until a frame of the transmission number specified is received after transmission of a re-transmission demand frame, of which the transmission number is specified, and wherein the threshold setting means sets a threshold in accordance with the round trip delay.

10. A data transmission system having a first station for dividing data into one or more sections and thereafter adding sequential transmission number thereto to create a frame or frames to transmit the same, and a second station for receiving the frame or frames,
the second station comprising detection means for detecting error frames among the frame or frames, which cannot be received normally, judgment means for judging from a status of generation of the error frames whether a single frame error is dominant or successive frame errors are dominant, threshold setting means for setting a threshold on the basis of the judgment, and re-transmission demanding means for transmitting to the first station a re-transmission demand frame, which demands re-transmission of all frames numbered subsequent to a specified transmission number, in the case where the number of the error frames being consecutive is equal to or more than the threshold, and for transmitting to the first station a re-transmission demand frame, which demands re-transmission of a frame having a specified transmission number, in the case where the number of the error frames being consecutive is less than the threshold.
